# EUROPEAN PATENT APPLICATION

(11) **EP 1 515 323 A1**
(43) Date of publication of application: **16.03.2005**
(21) Application number: 03733260.8
(22) Date of filing: 03.06.2003
(51) Int. Cl.: G11B 7/24, G11B 7/26

(54) **OPTICAL DISC AND ITS MANUFACTURING METHOD**

(30) Priority: 04.06.2002 JP 2002162879
(71) Applicant: TOYO INK MFG. CO., LTD., Chuo-ku Tokyo 1040-0031 (JP)
(72) Inventor: SATO, Keiichi c/o TOYO INK MFG. CO., LTD., Chuo-ku, Tokyo 104-0031 (JP); TERAYAMA, Michio c/o TOYO INK MFG. CO., LTD., Chuo-ku, Tokyo 104-0031 (JP); KIZAKI, Akihiko c/o TOYO INK MFG. CO., LTD., Chuo-ku, Tokyo 104-0031 (JP); HIROSE, Takeshi c/o TOYO INK MFG. CO., LTD., Chuo-ku, Tokyo 104-0031 (JP)
(74) Representative: Modiano, Guido, Dr.-Ing.
(86) International application number: PCT/JP2003/006984
(87) International publication number: WO 2003/102942

(57) **Abstract**

An optical disc includes a substrate provided with information recorded portions formed therein, and a plurality of layers further disposed on the substrate, wherein at least one of the plurality of layers is a layer cured and formed by electron beam irradiation.

## Description

### [Technical Field]

The present invention relates to an optical disc and manufacturing method thereof, which utilize irradiation of light, such as a laser beam, to read information, or to write and read information.

### [Background Art]

In recent years, optical discs typified by CDs are widely used as information recording media. Furthermore, in these days, as digital recording techniques for video images become popular, demands on optical discs with large recording capacity, typified by DVDs, are rapidly increased.

Optical discs, such as CDs and DVDs, are arranged to utilize irradiation of a laser beam to read information, or to write and read information. Of them, for example, a CD has a structure in which a substrate formed of a doughnut-shaped circular plate made of, e.g., polycarbonate is provided with a reflection layer formed thereon and a resin protection layer covering the reflection layer. When the substrate is molded, uneven portions or pits are formed on the substrate surface and arrayed along a helical line to record information. In general, the substrate is molded, based on a master plate called a stamper, while using an injection molding method.

As one of DVDs, there is known a write-once type DVD (DVD-R) including a structure body in which a substrate formed of a transparent circular plate is provided with a recording layer of an organic dye formed thereon, and a metal reflection layer and a resin protection layer both covering the recording layer. Where two structure bodies of this type are used, they are bonded via an adhesive layer such that their recording layers are positioned inside. Where one structure body of this type is used, the other structure body is replaced with a circular protection plate.

In such optical discs typified by CDs or DVD-Rs, the backside of a disc reverse to the side to be irradiated with laser light is usually provided with a label print to indicate recorded information (the title, image, or various pictures of audio record or video record). Conventionally, in general, where a label print is given, an underlaying is formed in advance to improve printing suitability (easiness of printing) or to improve printing effects (visual effects). Then, a print layer is formed on the underlaying by offset multicolor printing or the like.

Since a protection layer is typically transparent or translucent, if the underlaying is transparent, the metallic luster of a metal reflection layer can be directly observed on the surface. In this case, problems arise such that letters on the print layer become unclear due to interference of the metallic luster, and ink cannot be printed with its original hue. In order to solve these problems, a method is known of disposing a hiding layer on the backside of the underlaying or in place of the underlaying, to hide the hue appearing on the protection layer.

Furthermore, in general, optical discs have an outer protection layer (topcoat layer) as an outermost layer, to prevent scratches from being formed during handling.

Specifically, an optical disc typically has a substrate made of a transparent material, such as polycarbonate, which is provided with an information recorded portions formed therein or a recording layer disposed thereon for recording information. A reflection layer, protection coat layer, hiding layer, print layer, outermost layer or outer protection layer (topcoat layer), adhesive layer, and so forth are further stacked on the substrate to form a multi-layer structure.

Of them, each of the protection coat layer, hiding layer, print layer, outer protection layer (topcoat layer), and adhesive layer is mainly made of a resin or a material to be a resin.

Conventionally, resins used for these layers are ultraviolet curable resins, in general. Accordingly, when each of these layers is formed, an ultraviolet curable resin is applied on a substrate by spin coating, and then is cured by irradiation with ultraviolet rays.

However, when a resin is cured by ultraviolet ray irradiation, as described above, considerable part of the electric energy is converted into not ultraviolet rays but heat. As a consequence, not only the energy efficiency decreases, but also the substrate or recording layer may be degraded. Besides, ultraviolet rays do not necessarily have a sufficient resin curing ability. Thus, it takes time to perform curing, and the degree of adhesion of the resin becomes insufficient relative to the substrate or underlaying. Furthermore, since ultraviolet rays have low penetrating ability, it is necessary to repeat resin coating and ultraviolet ray irradiation many times, i.e., to perform a complicated process, where a colored and thick layer, such as a hiding layer, is treated.

### [Disclosure of Invention]

An object of the present invention is to provide an optical disc and manufacturing method thereof, which can employ a short-time manufacturing process without any complication, so that a substrate or recording layer is less degraded in manufacture, and layers have a high degree of adhesion.

According to the present invention, there is provided an optical disc characterized by comprising a substrate provided with an information recorded portions formed therein or a recording layer disposed thereon for recording information, and a plurality of layers further disposed on the substrate, wherein at least one of the plurality of layers is a layer formed by electron beam irradiation.

Alternatively, according to the present invention, there is provided an optical disc characterized by comprising a substrate provided with an information recorded portions formed therein or a recording layer disposed thereon for recording information, and a reflection layer and a protection coat layer disposed thereon, and further comprising at least one of a hiding layer, a print layer, and an outermost light transmitting protection layer, as needed, wherein at least one of the protection coat layer, the hiding layer, the print layer, and the light transmitting protection layer is a layer formed by electron beam irradiation.

Alternatively, according to the present invention, there is provided an optical disc characterized by comprising a substrate provided with an information recorded portions formed therein or a recording layer disposed thereon for recording information, and a reflection layer, a protection coat layer, a hiding layer, and a print layer disposed thereon in this order wherein at least the hiding layer is a layer formed by electron beam irradiation.

Alternatively, according to the present invention, there is provided an optical disc characterized by comprising two structure bodies bonded to each other by an adhesive layer, each of which comprises a substrate and one or a plurality of layers disposed thereon, and at least one of which is provided with an information recorded portions or a recording layer for recording information, wherein the adhesive layer is a layer cured by electron beam irradiation.

Alternatively, according to the present invention, there is provided a manufacturing method of manufacturing an optical disc that comprises a substrate provided with an information recorded portions formed therein or a recording layer disposed thereon for recording information, and a plurality of layers further disposed on the substrate, the method comprising: coating a resin to be cured by an electron beam to form at least one of the plurality of layers; and then curing the resin by irradiating the resin with the electron beam.

Alternatively, according to the present invention, there is provided a manufacturing method of manufacturing an optical disc that comprises a substrate provided with an information recorded portions formed therein or a recording layer disposed thereon for recording information, and a reflection layer and a protection coat layer disposed thereon, and further comprises at least one of a hiding layer, a print layer, and an outermost light transmitting protection layer, as needed, the method comprising: coating a resin to be cured by an electron beam to form at least one of the protection coat layer, the hiding layer, the print layer, and the light transmitting protection layer; and then curing the resin by irradiating the resin with the electron beam.

Alternatively, according to the present invention, there is provided a manufacturing method of manufacturing an optical disc that comprises a substrate provided with an information recorded portions formed therein or a recording layer disposed thereon for recording information, and a reflection layer, a protection coat layer, a hiding layer, and a print layer disposed thereon in this order, the method comprising: coating a resin to be cured by an electron beam to form at least the hiding layer; and then curing the resin by irradiating the resin with the electron beam.

Alternatively, according to the present invention, there is provided a manufacturing method of manufacturing an optical disc that comprises two structure bodies bonded to each other by an adhesive layer, each of which comprises a substrate and one or a plurality of layers disposed thereon, and at least one of which is provided with a recording layer, the method comprising: coating a resin to be cured by an electron beam to form the adhesive layer; and then curing the resin by irradiating the resin with the electron beam.

In any one of the optical discs and optical disc manufacturing methods, the electron beam is preferably set at an acceleration voltage of less than 150 kV, more preferably at an acceleration voltage of from 10 to 120 kV, and furthermore preferably at an acceleration voltage of from 30 to 80 kV. In this case an electron beam irradiation apparatus of the vacuum tube type is preferably used to radiate the electron beam set at such a low acceleration voltage.

Since the present invention employs a layer formed by an electron beam irradiation, as a layer for constituting an optical disc, the following effects can be obtained. Specifically, electron beam irradiation entails no heat generation, and thus unlikely degrades a substrate or recording layer. Electron beam irradiation has high ability in curing and cross-linking, and thus makes it possible to reliably form a desired film with a high hardness or cross-linkage density in a short time, and with a high degree of adhesion to an underlaying. An electron beam has high penetration ability, and thus makes it possible to obtain a layer in a short time without any complicated steps, even in treating a thick and colored layer, such as a hiding layer. Electron beam irradiation requires no photoinitiators, and thus prevents migration, yellowing, impurity precipitation, and ill effects on a recording layer, due to photoinitiators.

The present invention can be applied to any one of the optical discs that utilize light, such as a laser beam, to read or write information, which are typified by CDs, DVDs, MOs, MDs, and so forth.

### [Brief Description of Drawings]

FIG. 1 is a sectional view showing the structure of an optical disc, such as a playback only music CD or CD-ROM, according to an embodiment of the present invention;
FIG. 2 is a sectional view showing the structure of an optical disc prepared by adding other layers to the optical disc shown in FIG. 1;
FIG. 3 is a sectional view showing the structure of an optical disc prepared by adding still other layers to the optical disc shown in FIG. 1;
FIG. 4 is a sectional view showing the structure of an optical disc, which is mainly used as a playback only and single-sided record DVD, according to another embodiment of the present invention;
FIG. 5 is a sectional view showing the structure of an optical disc prepared by adding another layer to the optical disc shown in FIG. 4;
FIG. 6 is a sectional view showing the structure of an optical disc, which is mainly used as a playback only and double-sided record DVD, according to another embodiment of the present invention;
FIG. 7 is a sectional view showing the structure of an optical disc, which is mainly used as a playback only and double-sided record DVD, according to still another embodiment of the present invention;
FIG. 8 is a sectional view showing the structure of an optical disc, which is mainly used as a write-once type CD-R or DVD-R, according to still another embodiment of the present invention;
FIG. 9 is a sectional view showing the structure of an optical disc of the information rewritable type, such as an MO, MD, CD-RW, DVD-RAM, or DVD-RW, according to another embodiment of the present invention;
FIG. 10 is a view showing the relationship between electron beam penetration depth and irradiation dose observed at acceleration voltages of from 50 to 80 kV;
FIG. 11A is a side view showing the structure of an irradiation tube employed in an electron beam irradiation apparatus for forming layers; and
FIG. 11B is a bottom view showing the structure of the irradiation tube employed in the electron beam irradiation apparatus for forming layers.

### [Best Mode for Carrying Out the Invention]

Embodiments of the present invention will be specifically described hereinafter.

Optical discs can be categorized in terms of types, as follows. The present invention is applicable to any one of the optical discs of these types.
(1) Playback only type:
   Optical discs of this type contain information recorded in advance, and allow only reproduction of the information, while prohibiting writing. Optical discs of this type include a CD, video CD, CD-ROM, DVD-Video, DVD-Audio, DVD-ROM, Super Audio-CD, LD, etc.
(2) Write-once type:
   Optical discs of this type allow recording only once. Optical discs of this type include a CD-R, CD-R Audio, DVD-R, etc.
(3) Rewritable type:
   Optical discs of this type allow information recording and erasing, so as to rewrite information many times. Optical discs of this type are classified broadly into a magneto-optic recording type and a phase change recording type. The former type includes an MD, MO, MD-DATA, etc. The latter type includes a CD-RW, CD-RW Audio, DVD-RW, DVD-RAM, DVD+RW, PD, etc.

A detailed explanation will be given of the structure of optical discs, which the present invention is applied to.

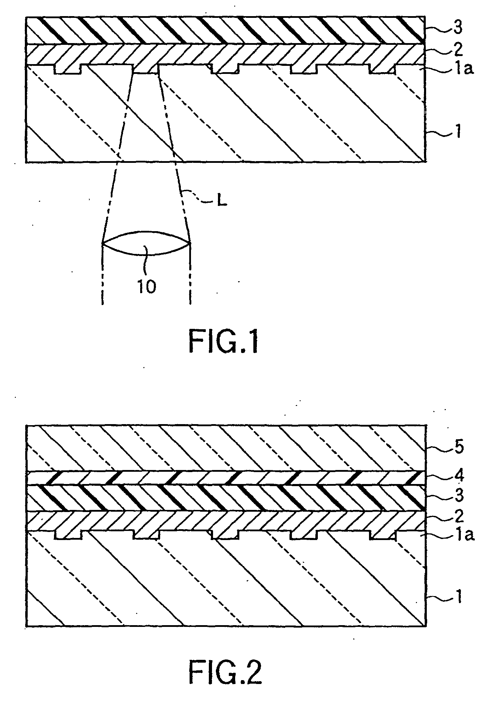

FIGS. 1 to 9 are sectional views showing optical discs of different types according to embodiments of the present invention.

FIGS. 1 to 3 show the structures of optical discs, such as a playback only music CD or CD-ROM. The optical disc shown in FIG. 1 includes a transparent substrate 1 made of polycarbonate, a reflection layer 2 made of, e.g., aluminum (Al), and a protection coat layer 3. The transparent substrate 1 has an information recorded portions 1a on one side, in which pits are formed correspondingly to information. The reflection layer 2 is disposed on the information recorded portions 1a of the transparent substrate 1. The protection coat layer 3 is disposed on the reflection layer 2. A print layer may be disposed on the protection coat layer 3. In the optical disc having this structure, when information is read, a laser beam L emitted from a semiconductor laser light source (not shown) is condensed by a lens 10 disposed in an optical head, to irradiate the information recorded portions 1a with the beam.

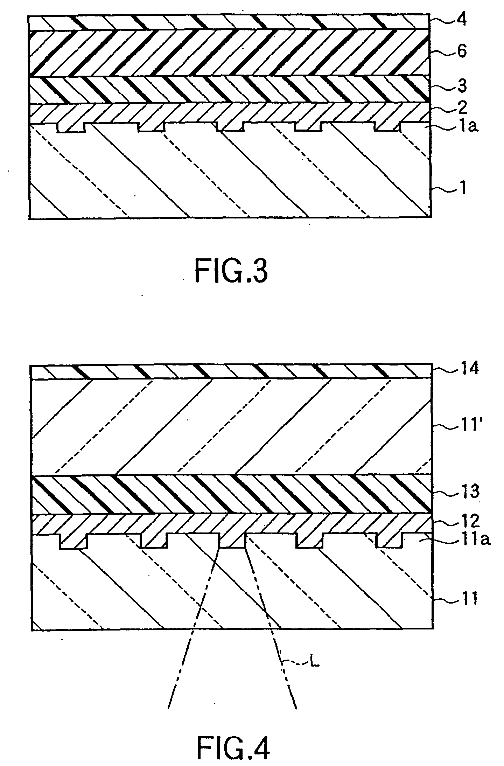

The optical disc shown in FIG. 2 includes a print layer 4 added on the protection coat layer 3 of the optical disc shown in FIG. 1, and a topcoat layer (light transmitting protection layer) 5 disposed on the print layer 4. The optical disc shown in FIG. 3 includes a hiding layer (for example, a white coat layer) 6 for removing the effects of the underlaying, added on the protection coat layer 3 of the optical disc shown in FIG. 1, and a print layer 4 disposed on the hiding layer 6. In FIG. 2, the print layer 4 is shown as a continuous layer, but the print layer 4 can be continuous or discontinuous, as the case may be (this matter is also common to the other drawings hereinafter). Furthermore, an ink image reception layer (not shown) for forming the print layer may be formed in place of the hiding layer, or along with the hiding layer (this matter is also common to the other drawings hereinafter).

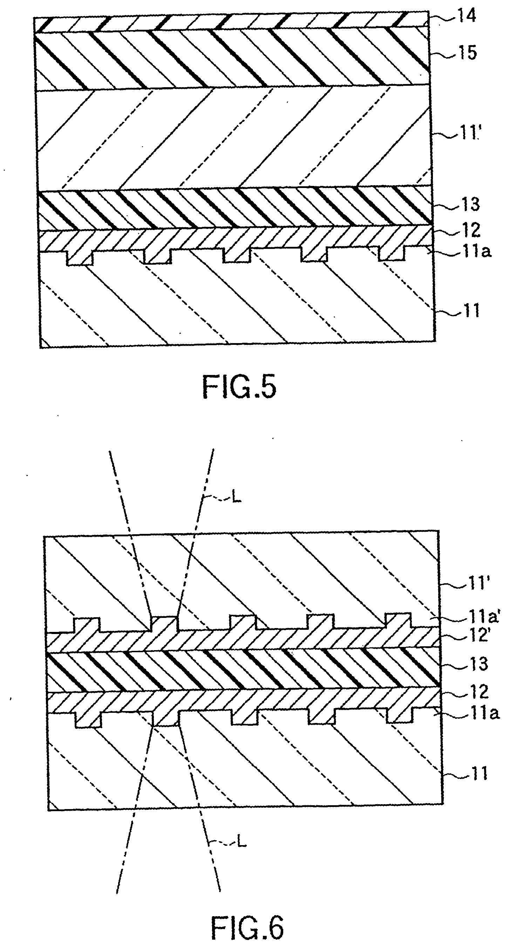

FIGS. 4 and 5 show the structures of optical discs, which are mainly used as a playback only and single-sided record DVD. The optical disc shown in FIG. 4 is formed of a first structure body and a second structure body bonded to each other by an adhesive layer 13. The first structure body includes a first transparent substrate 11 made of polycarbonate, and a reflection layer 12 made of, e.g., aluminum (Al). The first transparent substrate 11 has an information recorded portions 11a on one side, in which pits are formed correspondingly to information. The reflection layer 12 is disposed on the information recorded portions 11a of the first transparent substrate 11. The second structure body includes a second transparent substrate 11' made of polycarbonate, and a print layer 14 disposed thereon. The adhesive layer 13 is interposed between the reflection layer 12 and transparent substrate 11'. Of these layers, the print layer 14 is not indispensable. A topcoat layer (light transmitting protection layer) may be disposed on the print layer 14 In the optical disc having this structure, when information is read, the information recorded portions 11a is irradiated with a laser beam from the first transparent substrate 11 side. The optical disc shown in FIG. 5 includes a hiding layer 15 added on the second transparent substrate 11' of the optical disc shown in FIG. 4, and a print layer 14 disposed on the hiding layer 15. A topcoat layer may be disposed on the print layer 14.

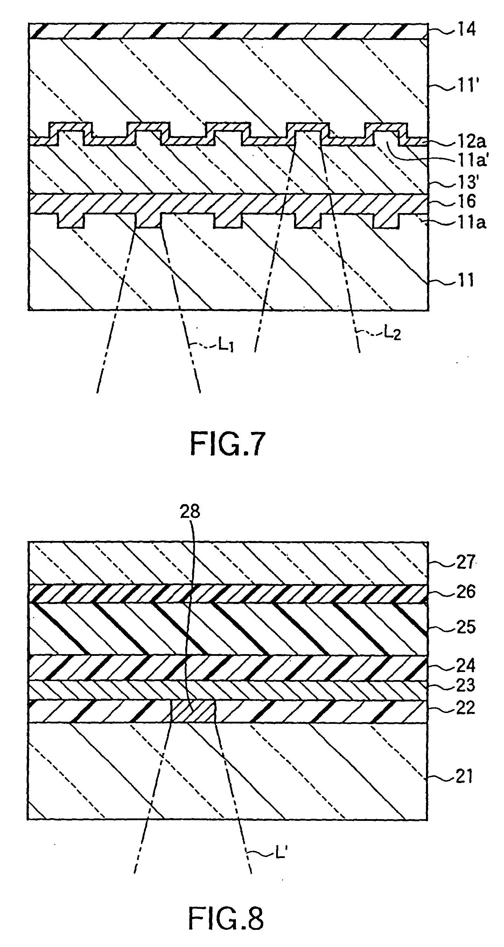

FIGS. 6 and 7 show the structures of optical discs, which are mainly used as a playback only and double-sided record DVD. The optical disc shown in FIG. 6 is formed of a first structure body and a second structure body bonded to each other by an adhesive layer 13. The first structure body includes a first transparent substrate 11 made of polycarbonate, and a reflection layer 12 made of, e.g., aluminum (Al). The first transparent substrate 11 has a first information recorded portions 11a on one side, in which pits are formed correspondingly to information. The reflection layer 12 is disposed on the first information recorded portions 11a of the first transparent substrate 11. The second structure body includes a second transparent substrate 11' made of polycarbonate, and a reflection layer 12' made of, e.g., aluminum (Al). The second transparent substrate 11' has a second information recorded portions 11a' on one side, in which pits are formed correspondingly to information. The reflection layer 12' is disposed on the second information recorded portions 11a' of the second transparent substrate 11'. The adhesive layer 13 is interposed between the reflection layer 12 and reflection layer 12'. In the optical disc having this structure, when the information on the first recorded portions 11a is read, the first information recorded portions 11a is irradiated with a laser beam L from the first transparent substrate 11 side. When the information on the second recorded portions 11a' is read, the second information recorded portions 11a' is irradiated with a laser beam L from the second transparent substrate 11' side.

The optical disc shown in FIG. 7 is formed of a first structure body and a second structure body bonded to each other by a transparent adhesive layer 13'. The first structure body includes a first transparent substrate 11 made of polycarbonate, and a translucent layer 16 made of, e.g., gold (Au). The first transparent substrate 11 has a first information recorded portions 11a on one side, in which pits are formed correspondingly to information. The translucent layer 16 is disposed on the first information recorded portions 11a of the first transparent substrate 11. The second structure body includes a second transparent substrate 11' made of polycarbonate, a reflection layer 12a made of, e.g., aluminum (Al), and a print layer 14. The second transparent substrate 11' has a second information recorded portions 11a' on one side, in which pits are formed correspondingly to information. The reflection layer 12a is disposed on the second information recorded portions 11a' of the second transparent substrate 11'. The print layer 14 is disposed on the second transparent substrate 11'. The transparent adhesive layer 13' is interposed between the translucent layer 16 and reflection layer 12a. In the optical disc having this structure, when the information on the first recorded portions 11a is read, the first information recorded portions 11a is irradiated with a laser beam L1 from the first transparent substrate 11 side. When the information on the second recorded portions 11a' is read, the second information recorded portions 11a' is irradiated with a laser beam L2 passing through the translucent layer 16 and transparent adhesive layer 13' from the first transparent substrate 11 side. Of these layers, the print layer 14 is not indispensable. A topcoat layer (light transmitting protection layer) may be disposed on the print layer 14. A hiding layer may be interposed between the print layer 14 and second transparent substrate 11'.

FIG. 8 shows the structure of an optical disc, which is mainly used as a write-once type CD-R or DVD-R The optical disc shown in FIG. 8 includes a transparent substrate 21 made of polycarbonate, on which a recording layer 22 made of an organic dye, a reflection layer 23 made of, e.g., Al, a protection coat layer 24, a hiding layer 25, a print layer 26, and a topcoat layer (light transmitting protection layer) 27 are stacked in this order. The hiding layer 25, print layer 26, and topcoat layer (light transmitting protection layer) 27 are not indispensable. If an optical disc is formed of the structure body up to the reflection layer 23 or protection coat layer 24, and a structure body including a transparent substrate and stacked on the former structure body via an adhesive layer, this optical disc can constitute a DVD-R. In the optical disc having this structure, the recording layer 22 is irradiated with a laser beam L' of a high power for recording from the transparent substrate 21 side, so that the periphery of a dye portion of the recording layer 22 is transformed to form a record mark 28. The record mark 28 has a reflection coefficient lower than the other portions of the recording layer 22. When the information thereof is read, the recording layer 22 is irradiated with a laser beam for reading, which is lower in power than the laser beam L' for recording.

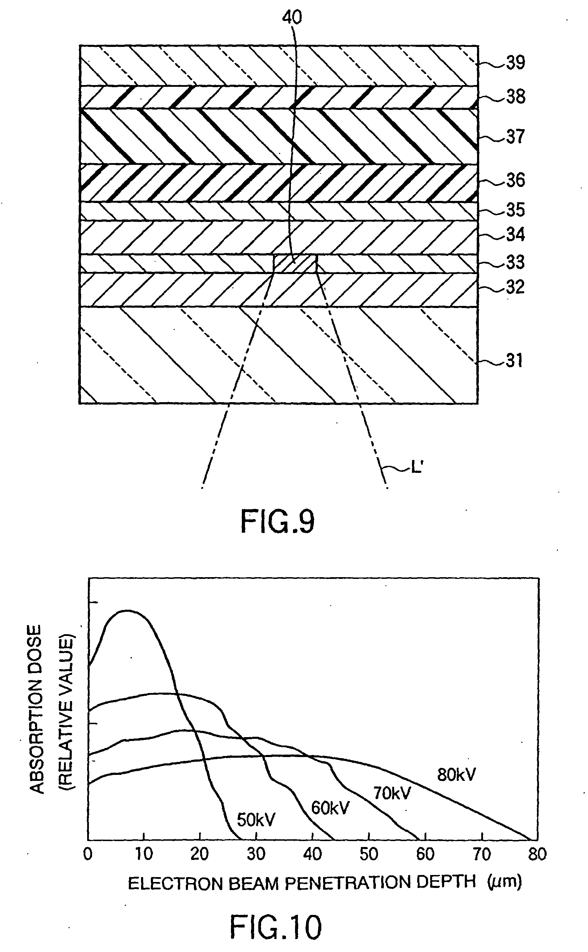

FIG. 9 shows the structure of an optical disc of the information rewritable type, such as an MO, MD, CD-RW, DVD-RAM, or DVD-RW. The optical disc shown in FIG. 9 includes a transparent substrate 31 made of polycarbonate, on which a first dielectric layer 32 made of, e.g., ZnS-SiO₂, an information rewritable recording layer 33, a second dielectric layer 34 made of, e.g., ZnS-SiO₂, a reflection layer 35, a protection coat layer 36, a hiding layer 37, a print layer 38, and a topcoat layer (light transmitting protection layer) 39 are stacked in this order. The hiding layer 37, print layer 38, and topcoat layer (light transmitting protection layer) 39 are not indispensable. If an optical disc is formed of the structure body up to the reflection layer 35 or protection coat layer 36, and a structure body including a transparent substrate and stacked on the former structure body via an adhesive layer, this optical disc can constitute a DVD-RAM or DVD-RW.

As the information rewritable recording layer 33, there is a magneto-optic recording type and a phase change recording type, as described previously. The magneto-optic recording type is used for an MO or MD, and employs a magnetic material of an alloy of a rare-earth and a transition metal. When information is written, the recording layer is irradiated with a laser beam L' for recording, and thereby heated to a temperature not less than the Curie point or compensation temperature of the recording layer material, so that magnetization inversion is caused by an external magnetic field. When information is erased magnetization inversion is caused in the same way. When information is read, a Polar Kerr effect caused by irradiation with a laser beam is utilized.

The phase change recording type is used for a DVD-RAM, DVD-RW or the like, and employs a material that is phase changeable between amorphous and crystal for the recording layer to utilize a difference between their reflection coefficients. Specifically, irradiation with a laser beam L' of a high power for recording is performed to heat the irradiated portion to a high temperature, and then the laser beam is turned off to rapidly cool this portion, thereby forming a record mark 40 in an amorphous state. When the information is erased, the portion is irradiated with a laser beam, which is lower in power than that for recording. At this time, the record mark 40 in the amorphous state is heated to a lower temperature, and then slowly cooled by turning off the laser beam, so that this portion is returned to a crystal phase to erase the information. When the information is read, the portion is irradiated with a laser beam of a further lower power, and a difference between the reflection coefficients of the crystal phase and amorphous phase is detected.

In the optical discs described above, each of the protection coat layers 3, 24, and 36, hiding layers 6, 15, 25, and 37, topcoat layers (light transmitting protection layers) 5, 27, and 39, adhesive layers 13 and 13', and ink image reception layers (not shown) may be formed by electron beam irradiation. Typically, in order to form each of the layers, the layer is prepared from a resin to be cured by the electron beam, and then is cured by electron beam irradiation. As a matter of course, the layer may be given certain reformation by electron beam irradiation. In each of the optical discs shown in FIGS. 1 to 9, a substrate is provided with an information recorded portions formed therein or a recording layer disposed thereon for recording information, and a plurality of layers are further disposed thereon. Any one of the protection coat layer hiding layer, light transmitting protection layer, and adhesive layer is a layer formed by electron beam irradiation. Most preferably, all the layers employed in each optical disc are layers formed by electron beam irradiation, and, typically, they are layers cured by electron beam irradiation.

Since the present invention utilizes an electron beam irradiation to form a layer, it has the following advantages, as compared to a prior art in which an ultraviolet curable resin is coated and then cured by ultraviolet ray irradiation to form a layer.
(1) Electron beam irradiation entails no heat generation, and thus unlikely degrades a substrate or recording layer.
(2) Electron beam irradiation has high ability in curing and cross-linking, and thus makes it possible to reliably form a desired film with a high hardness or cross-linkage density in a short time, and with a high degree of adhesion to the underlaying.
(3) An electron beam has high penetration ability, and thus makes it possible to bring about predetermined effects, such as curing, in a short time by performing irradiation almost one time, even in treating a thick and colored layer, such as a hiding layer. On the other hand, in a case where an ultraviolet curable resin is used, since ultraviolet rays have low penetrating ability, it is inevitably troublesome to perform irradiation several times.
(4) Electron beam irradiation requires no photoinitiators, and thus prevents migration, yellowing, impurity precipitation, and ill effects on a recording layer, due to photoinitiators.
(5) Where an electron beam curable resin is cured by electron beam irradiation, a film with a high cross-linkage density is formed, which provides good properties for an outermost light transmitting protection layer.

The constituent material of each of the protection coat layers 3, 24, and 36, and topcoat layers (light transmitting protection layers) 5, 27, and 39 may be exemplified by resins, such as acrylic resins, epoxy resins, urethane resins, and polyester resins, and ultraviolet ray or electron beam curable resins using various photo-responsive monomers.

In general, a layer formed by electron beam irradiation is made of a material that causes curing, cross-linking, or reformation by electron beam irradiation, and is typically made of an electron beam curable resin. The constituent of a coating material of the electron beam cure type, i.e., an electron beam curable resin, such as an ink, adhesive, pressure sensitive adhesive, or varnish, may be exemplified by vinyl type monomers, acrylic type monomers, and acrylate type or methacrylate type (which will be referred to as a (meta)-acrylate type, hereinafter) monomers, which are mono-functional monomers and/or two or more functional monomers that have an α,β-unsaturated double bond in one molecule, in general. There is a case where a (meta)-acrylate type monomer has a functional group other than an α,β-unsaturated double bond. A mono-functional monomer may be used alone or along with a two or more functional monomer to adjust a cross-linkage density.

Monomers mentioned here mean to include so called monomers in a narrow sense, as described above, which have a relatively low molecular weight, such as a weight-average molecular weight of less than 1000, and also include oligomers and pre-polymers, which have a relatively high molecular weight, such as a weight-average molecular weight of not less than 1000 but less than 10000. Oligomers having an α,β-unsaturated double bond may be exemplified by polyester (meta)-acrylate, polyurethane (meta)-acrylate, epoxy (meta)-acrylate, and (meta)-acrylated maleic-acid-modified polybutadiene.

A thermoplastic resin may be used along with a monomer, oligomer and/or pre-polymer, as that described above. The thermoplastic resin may be exemplified by polymers, such as acrylic resin, polyester resin, polycarbonate resin, polyacetal resin, polyurethane resin, alkyd resin, polyvinylbutyral resin, and graft copolymers such as acrylic-urethane resin and acrylic-polyester resin. These polymers may be used alone or by mixture of two or more types.

A print ink, paint, adhesive, pressure sensitive adhesive, or varnish of the electron beam cure type to be coated may contain an additive agent, such as a coloring agent (pigment or dye), levelling agent, antifoaming agent, antiblocking agent, adhesive assistant agent, dispersing agent, dryness adjusting agent, abrasion proof agent, ultraviolet absorption agent, ultraviolet stabilizing agent, slip-property improving agent, or trapping-property improving agent, as needed.

In order to ensure a dispersing of a coloring agent and a moderate viscosity, it may contain a solvent by an amount that does not affect the substrate or underlaying layer in a drying step. The solvent may be exemplified by a ketonic compound, ester compound, ether compound, aromatic compound, aliphatic compound, halogenated carbon hydride compound, alcohol, and water.

A method for printing or coating a print ink, adhesive, pressure sensitive adhesive, or varnish of the electron beam cure type onto the substrate or underlaying may be exemplified by typical printing methods such as regular gravure printing, offset printing, silk screen printing, and letterpress printing, and also on-demand printing methods, such as ink jet printing. The coating method may be exemplified by a gravure coat method, reverse coat method, kiss coat method, dye coat method, lip coat method, comma coat method, blade coat method, roll coat method, knife coat method, curtain coat method, slot orifice method, and spray coat method. The coating may be performed by one step or several steps. The coating may be performed by combination of different methods.

Each of the hiding layers 6, 15, 25, and 37 may be made of an electron beam curable resin, a resin other than the electron beam cure type (such as the ultraviolet cure type, thermoset type, or the like), or a layer formed by vapor deposition or sputtering. In the case of a resin type layer, a coating material is prepared by selecting single or plural kinds of monomers, oligomers, pre-polymers, and resins, and adding thereto a solvent and other additive agents, as needed, to disperse a pigment. Then, the coating material is coated or printed to form the layer.

The pigment may be exemplified by organic pigments, such as quinacridone's, anthraquinone's, perylene's, perynone's, diketopyrrolopyrrole's, isoindolinone's, condensed azo's, benzimidazolone's, monoazo's, insoluble azo's, naphthol's, flavanthrone's, anthrapyrimidine's, quinophthalone's, pyranthrone's, pyrazolone's, thioindigo's, anthanthrone's, dioxazine's phthalocyanine's, and indanthrone's. The pigment may be also exemplified by inorganic pigments, such as metal complexes, e.g., nickel dioxyn yellow and copper azomethine yellow; metal oxides, e.g., titanium oxide, iron oxide, and zinc oxide; metal salts, e.g., barium sulfate and calcium carbonate; carbon black; aluminum; and mica. In order to provide metallic feeling or pearl feeling, metal fine powder, such as aluminum, or mica fine powder may be used.

The ink image reception layer may also be made of an electron beam curable resin, or a resin other than the electron beam curable resin type (such as the ultraviolet cure type, thermoset type, or the like), and further contain a dispersed pigment, as needed, as described above with reference to the hiding layer. The ink image reception layer is used for the intended purpose to improve printing suitability in printing. If the hiding layer has a sufficient printing suitability by itself (to bring about brilliant colors and no bled colors), no ink image reception layer may be disposed. Furthermore, the ink image reception layer may have a function of the hiding layer, thereby omitting the hiding layer.

The ink image reception layer may contain a hydrophilic polymer or hydrophilic monomer to have a hydrophilic surface, so that it is more printable. Where printing is performed directly on the hiding layer without the ink image reception layer, the hiding layer may contain a hydrophilic polymer or hydrophilic monomer to be more printable, as in the case of the ink image reception layer. The following explanation of a hydrophilic polymer or hydrophilic monomer contained in the ink image reception layer can be applied to the hiding layer where printing is performed directly on the hiding layer.

In order to further improve properties of the ink image reception layer (printing suitability), the constituent material of the ink image reception layer may be made of a resin that contains single or plural kinds of hydrophilic polymers and/or single or plural kinds of hydrophilic monomers, single or plural kinds of cross-linkage monomers, and single or plural kinds of cation monomers, and is formed by irradiation with an electron beam radiated from an electron beam irradiation apparatus; i.e., made of an electron beam curable resin.

For printing an ink, a hydrophilic polymer is added to an exposed layer on the surface (ink image reception layer or hiding layer), so that the ink deposited on the surface is readily fixed. The hydrophilic polymer may be exemplified by homo-polymers and copolymers, such as polyvinyl alcohol, hydroxyethyl cellulose, hydroxypropyl cellulose, polyacrylamide, polyvinyl pyrrolidone, and polyethylene oxide. In the case of a copolymer, it may contain a combination with one other than a hydrophilic polymer, which may be formed of single or plural kinds of hydrophilic polymers. As the amount of a hydrophilic polymer increases, the ink from a pen or printer is more reliably fixed. However, in this case, the ink tends to have a higher viscosity and bring about problems, such as coating difficulty, and may further cause precipitation of its polymers.

A hydrophilic polymer contained in the ink image reception layer can be dissolved into a hydrophilic monomer having high polarity. The hydrophilic monomer may be exemplified by monomers having an OH group in the molecule, such as hydroxy (meta)-acrylate, hydroxypropyl (meta)-acrylate, hydroxybutyl (meta)-acrylate, hydroxypentyl (meta)-acrylate, phenoxyhydroxypropyl (meta)-acrylate, chlorohydroxypropyl (meta)-acrylate, diethylene glycol mono(meta)-acrylate, triethylene glycol mono(meta)-acrylate, polyethylene glycol mono(meta)-acrylate, dipropylene glycol mono(meta)-acrylate, polypropylene glycol mono(meta)-acrylate, glycerin mono(meta)-acrylate, glycerin di(meta)-acrylate, pentaerythritol tri(meta)-acrylate, phenylglycidyl-ether (meta)-acrylate, dipentaerythritol penta(meta)-acrylate, and di(meta)-acrylate of bisphenol-A epoxy resin. The hydrophilic monomer may be also exemplified by monomers having high polarity, such as dimethyl (meta)-acrylamide, diethyl (meta)-acrylamide, acryloyl morpholine, N-vinyl pyrrolidone, 2-ethoxyethyl (meta)-acrylate, 2-methoxyethyl (meta)-acrylate, ethylcarbitol (meta)-acrylate, and glycidyl (meta)-acrylate. In this case, the monomer may be a mono-functional or two or more functional monomer.

Such a hydrophilic monomer uniformly dissolves a hydrophilic polymer, as a solvent does, and also improves the printing suitability (concerning bleeding or repelling) for a case where letters are written or printed by a pen or ink jet printer with an ink containing a lot of organic solvent or water. Particularly, where a hydrophilic polymer of this kind is used, it is possible to easily dissolve the hydrophilic polymer, by employing a monomer having a functional group with high polarity, such as a hydroxyl group, carboxyl group, amino group, or amide group, in the molecule. In order to improve the solubility of a hydrophilic polymer, it may partly contain a solvent, which may be exemplified by water; alcohols, e.g., methanol, ethanol, propanol, butanol, pentanol, and hexanol; ethers, e.g., dimethyl ether, diethyl ether, methylethyl ether, and dipropyl ether; ketones, e.g., acetone and cyclohexane; and halogenated solvents, e.g. dichloroethane and chloroform. However, the amount of solvent should be as small as possible, and preferably be zero.

The ink image reception layer may further contain a cation monomer to further improve the printing suitability (concerning bleeding or repelling) and printing clearness for a case where letters are written on a layer surface exposed on the surface by a pen or ink jet printer with an ink containing a lot of organic solvent or water. Particularly, it is effective to use a cation monomer having a group, such as an amino group or amide group, in the molecule.

The cation monomer having an amino group or amide group may be exemplified by dimethyl (meta)-acrylamide, diethyl (meta)-acrylamide, dimethylaminomethyl (meta)-acrylate, dimethylaminomethyl (meta)-acrylate quaternary salt, dimethylaminoethyl (meta)-acrylate, dimethylaminoethyl (meta)-acrylate quaternary salt, diethylaminomethyl (meta)-acrylate, diethylaminomethyl (meta)-acrylate quaternary salt, diethylaminoethyl (meta)-acrylate, diethylaminoethyl (meta)-acrylate quaternary salt, methylene bis(meta)-acrylate, acryloyl morpholine, and N-vinyl pyrrolidone.

The layer may further contain a cross-linkage monomer, which may be exemplified by trimethylolpropane tri(meta)-acrylate, acrylated isocyanurate, 1,4-butanediol di(meta)-acrylate, 1,6-hexanediol di(meta)-acrylate, neopentyl glycol di(meta)-acrylate, dicyclopentadienyl di(meta)-acrylate, and pentaerythritol tetra(meta)-acrylate.

Each of the adhesive layers 13 and 13' is made of an adhesive of the reaction cure type (monomer type or oligomer type), which may be exemplified by a vinyl polymerization type (cyanoacrylate's, diacrylate's, and unsaturated polyester resins), condensed type (phenol resins, urea resins, and melamine resins), and polyaddition type (epoxy resins and urethane resins).

Each of the layers described above is formed by electron beam irradiation, which is preferably performed at an acceleration voltage of less than 150 kV to emit an electron beam. Where the acceleration voltage is set at 150 kV or more, the energy of an electron beam becomes unfavorably too high, so not only the energy efficiency decreases, but also the substrate or recording layer may be degraded. In order to give predetermined effects with good energy efficiency on a portion irradiated with an electron beam, the acceleration voltage is preferably set at 10 to 120 kV, and more preferably at 30 to 80 kV.

FIG. 10 is a view showing the relationship between electron beam penetration depth and absorption dose (relative value) observed at acceleration voltages of from 50 to 80 kV. As shown in FIG. 10, the penetration depth varies, depending on the acceleration voltage of an electron beam. Accordingly, the acceleration voltage is preferably set at a suitable value, in accordance with the thickness of a layer to be irradiated with an electron beam.

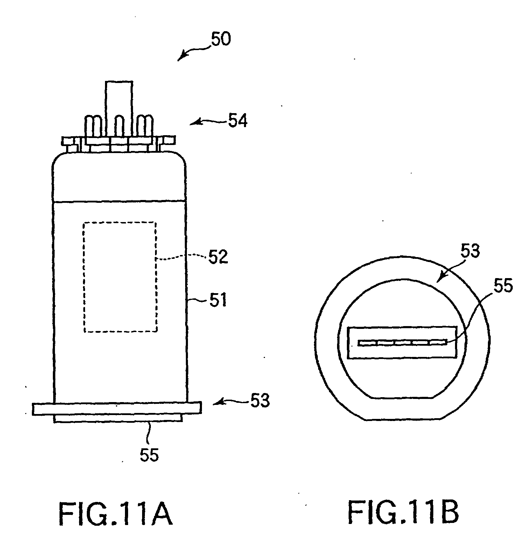

In order to perform electron beam irradiation at a relatively low acceleration voltage, as described above an electron beam irradiation apparatus of the vacuum tube type is preferably employed. An electron beam irradiation apparatus of the vacuum tube type includes an irradiation tube 50 used as an electron beam generator, as shown in FIGS. 11A and 11B. Specifically, as shown in FIG. 11A, it includes a cylindrical vacuum tube 51 made of glass or ceramic; an electron beam generating portion 52 disposed in the vacuum tube (tube) 51 serving to draw out electrons emitted from an cathode and accelerate the electrons so as to generate an electron beam; an electron beam emitting portion 53 disposed at an end of the vacuum tube 51 to emit the electron beam; and a pin portion 54 to which electricity is supplied from a power supply, which is not shown. The electron beam emitting portion 53 is provided with a thin film radiation window 55. The radiation window 55 of the electron beam emitting portion 53 does not allow any gas to pass therethrough, but allows the electron beam to pass therethrough. As shown in FIG. 11B, the radiation window 55 has a shape like a slit. An irradiation target is placed in an irradiation chamber and irradiated with the electron beam radiated from the radiation window 55.

Such an electron beam irradiation apparatus of the vacuum tube type is fundamentally different from an electron beam irradiation apparatus of the conventional drum type. An electron beam irradiation apparatus of the conventional drum type performs electron beam irradiation while keeping the interior of a drum vacuum-exhausted.

An apparatus having an irradiation tube of this structure is disclosed in U.S. Patent No. 5,414,267. As described above, this apparatus can effectively emit an electron beam even at a low acceleration voltage, and thus can hardly affect the substrate or recording layer. Furthermore, the electron beam has a small energy and thus does not generate a lot of radiation rays, such as X-rays. As a consequence, a shielding device for shielding radiation rays can be small or reduced.

In general, electron beam irradiation is performed in an inert gas atmosphere, such as nitrogen gas. However, depending on conditions, the irradiation may be performed in air or an atmosphere containing an inert gas by an amount to be closer to air.

As described above, since the shield can be small or reduced, and the electron beam generating portion can be small due to a lower acceleration voltage, the electron beam irradiation apparatus can be significantly downsized.

The present invention is not limited to the embodiments described above, but may be modified in various manners. For example, the embodiments are described with reference to the typically structures of optical discs shown in FIGS. 1 to 9, but they are not limited thereto. The transparent substrate may be made of not polycarbonate, but glass. The electron beam irradiation apparatus is not limited to an apparatus of the vacuum tube type described above, but may be an apparatus of the regular drum type. However, the vacuum tube type is preferable in light of controllability. Specifically, as described above, an electron beam irradiation apparatus of the vacuum tube type allows a shield to be smaller, and inerting to be reduced. Furthermore, this type can emit an electron beam at a low acceleration voltage, and thus the electron beam generating portion can be small. As a consequence, the electron beam irradiation apparatus can be significantly downsized, and thus is extremely preferable.

### Examples

An explanation will be given of examples according to the present invention. It should be noted that the scope of the present invention is never limited by the following examples. Furthermore, "%" denotes "% by weight" in the following explanation.

### (Example 1)

An optical disc having the structure shown in FIG. 1 was manufactured. Specifically, a substrate 1 made of polycarbonate was prepared, and a stamper formed in advance by an electrocasting step was attached to an injection molding machine. Under these conditions, an injection molding method was performed to form a molded article of polycarbonate having a diameter of 120 mm and thickness of 1.2 mm, with pits having a width of 0.5 µm, length of 0.9 to 3.2 µm, depth of 0.1 µm, and pitch of 1.6 µm. Then, aluminum vapor deposition was performed on the pits to form a reflection layer 2 for reflecting laser light. On the other hand, a protection coat agent was prepared from ETERCURE 6905 (Eternal Chemical Co., Ltd. (Taiwan), and Toyo Ink Mfg. Co., Ltd.) by excluding the initiator thereof. This protection coat agent was coated onto the reflection layer 2. After the coating, electron beam irradiation was performed thereon by an electron beam irradiation apparatus of the vacuum tube type (Min-EB Lab machine, Toyo Ink Mfg. Co., Ltd.) to obtain a cured film (protection coat layer 3), thereby fabricating an optical disc (1). The electron beam irradiation was performed at an acceleration voltage of 50 kV, absorption dose of 30 kGy, and transfer speed of 30 m/min, within a nitrogen gas atmosphere (oxygen concentration of 200 ppm).

The optical disc (1) thus obtained was examined in terms of the curing level of the protection coat layer 3 on the surface, using the following three methods. The curing level was examined immediately after the irradiation and one-day after the irradiation.
1. Dryness test by finger touch (using evaluation on a five-to-zero scale, i.e., completely cured "5" to not cured "1").
2. Abrasion-resistance test on a print surface by fingernails (which will be referred to as a scratch test, hereinafter), (using evaluation on a five-to-zero scale, i.e., good "5" to bad "1").
3. MEK rubbing test (by gently rubbing a print surface with a cotton bud containing methylethyl ketone, and measuring the number of rubbing actions up to the underlaying being exposed).

### (Example 2)

A silk screen white ink was prepared from SERIDISK URA05 (Toyo Ink Mfg. Co., Ltd.) by excluding the initiator thereof. A new optical disc (1) was manufactured in the same way as the example 1, and the white ink was screen printed on the protection coat layer 3 of the disc. Then, electron beam irradiation was performed thereon in the same way as the example 1 to form a white layer (hiding layer 6), thereby fabricating an optical disc (2)-1 having the structure shown in FIG. 3. The optical disc (2)-1 thus obtained was examined in terms of the curing level of the white layer (hiding layer 6), using the three methods, i.e., the finger touch dryness test, scratch test, and MEK rubbing test, immediately after the irradiation and one-day after the irradiation, as in the example 1.

Furthermore, planographic inks were prepared from the yellow, red, blue, and black of FD AQUALESS NPG series (Toyo Ink Mfg. Co., Ltd.) by excluding the initiator thereof. They were used to perform color printing (label printing) on the white layer of an optical disc (2)-1. Then, electron beam irradiation was performed thereon in the same way as the example 1 to obtain a print layer 4, thereby fabricating an optical disc (2)-2. The printing showed good image reproducibility with brilliant colors and no bled colors.

### (Example 3)

A molded article of polycarbonate was manufactured in the same way as the example 1, and sputtering of silver was performed thereon to form a reflection layer 12 for reflecting laser light. Then, ETERCURE 6815 (Eternal Chemical Co., Ltd. (Taiwan), and Toyo Ink Mfg. Co., Ltd.), i.e., an adhesive of the ultraviolet cure type, was coated on the reflection layer 12 by a spin coater, and a new polycarbonate substrate 11' having no recording layer was bonded thereto by pressure. Then, ultraviolet ray irradiation was performed from above this new polycarbonate substrate 11' to bond the two polycarbonate substrates, thereby fabricating an optical disc (3)-1 having the structure shown in FIG. 4. The ultraviolet ray irradiation was performed at a lamp output of 120 W/cm, and transfer speed of 50 m/min.

Furthermore, planographic inks with no initiator, prepared as in the example 2, were used to perform color printing (label printing) on the new polycarbonate substrate. Then, electron beam irradiation was performed thereon in the same way as the example 1 to form a print layer 14, thereby fabricating an optical disc (3)-2. The printing showed good image reproducibility with brilliant colors and no bled colors.

### (Example 4)

A new optical disc (3)-1 was manufactured in the same way as the example 3, and a white ink with no initiator, prepared as in the example 2, was screen printed on the polycarbonate substrate 11' of the disc. Then, electron beam irradiation was performed thereon in the same way as the example 1 to obtain a white layer (hiding layer 15), thereby fabricating an optical disc (4)-1 having the structure shown in FIG. 5. The optical disc (4)-1 thus obtained was examined in terms of the curing level of the white layer (hiding layer), using the three methods, i.e., the finger touch dryness test, scratch test, and MEK rubbing test, immediately after the irradiation and one-day after the irradiation, as in the example 1.

Furthermore, planographic inks with no initiator, prepared as in the example 2, were used to perform color printing (label printing) on the white layer of an optical disc (4)-1 thus manufactured. Then, electron beam irradiation was performed thereon in the same way as the example 1 to form a print layer 14, thereby fabricating an optical disc (4)-2. The printing showed good image reproducibility with brilliant colors and no bled colors.

### (Comparative example 1).

An optical disc (C1) was manufactured in the same way as the example 1 except that ETERCURE 6905 was used as it was without excluding the initiator thereof, and the protection coat layer was cured not by electron beam irradiation but by ultraviolet ray irradiation. The ultraviolet ray irradiation was performed under conditions as those described in the example 3. The optical disc (C1) thus obtained was examined in terms of the curing level of the protection coat layer on the surface in the same way as the example 1.

### (Comparative example 2)

An optical disc (C2)-1 was manufactured in the same way as the example 2 except that, on a new optical disc (C1) manufactured in the same way as the comparative example 1, SERIDISK URA05 was used as it was without excluding the initiator thereof, and the white layer (hiding layer) was cured not by electron beam irradiation but by ultraviolet ray irradiation. The optical disc (C2)-1 thus obtained was examined in terms of the curing level of the white layer (hiding layer) in the same way as the example 1.

Furthermore, planographic inks of the yellow, red, blue, and black of FD AQUALESS NPG series (Toyo Ink Mfg. Co., Ltd.) were used, without excluding the initiator thereof, to perform color printing (label printing) on the white layer of an optical disc (C2)-1. Then, ultraviolet ray irradiation was performed thereon to form a print layer, thereby fabricating an optical disc (C2)-2. The printing showed good image reproducibility with brilliant colors and no bled colors.

### (Comparative example 3)

A new optical disc (3)-1 was manufactured in the same way as the example 3, and a silk screen white ink of SERIDISK URA05 (Toyo Ink Mfg. Co., Ltd.) without excluding the initiator thereof was screen printed on the polycarbonate substrate 11' of the disc. Then, ultraviolet ray irradiation was performed thereon to form a white layer (hiding layer 6), thereby fabricating an optical disc (C3)-1. The optical disc (C3)-1 thus obtained was examined in terms of the curing level of the white layer (hiding layer), using the three methods, i.e., the finger touch dryness test, scratch test, and MEK rubbing test, immediately after the irradiation and one-day after the irradiation, as in the example 1.

Furthermore, planographic inks of the yellow, red, blue, and black of FD AQUALESS NPG series (Toyo Ink Mfg. Co., Ltd.) were used, without excluding the initiator thereof, to perform color printing (label printing) on the white layer of an optical disc (C3)-1 thus manufactured. Then, ultraviolet ray irradiation was performed thereon to form a print layer, thereby fabricating an optical disc (C3)-2. The printing showed good image reproducibility with brilliant colors and no bled colors.

Table 1 shows the result of examination on the curing level of layers of the examples 1, 2, and 4, and comparative example 1, 2, and 3.

**Table 1**

| | | | Example of Present Invention | | | Comparative Example | | |
|---|---|---|---|---|---|---|---|---|
| | | | 1 | 2 | 4 | 1 | 2 | 3 |
| Physical Property | Finger Touch Dryness Test | Immediately After | 5 | 5 | 5 | 2 | 1 | 1 |
| | | One-Day After | 5 | 5 | 5 | 5 | 5 | 5 |
| | Scratch Test | Immediately After | 5 | 5 | 5 | 1 | 1 | 1 |
| | | One-Day After | 5 | 5 | 5 | 5 | 5 | 5 |
| | MEK Rubbing Test | Immediately After | >100 | >100 | >100 | <10 | <10 | <10 |
| | | One-Day After | >100 | >100 | >100 | >100 | >100 | >100 |

As shown in Table 1, the examples 1; 2, and 4 utilizing electron beam irradiation in the curing process showed a high curing level in the tests immediately after the irradiation and thereafter. On the other hand, the comparative example 1, 2, and 3 utilizing ultraviolet ray irradiation in the curing process showed a low curing level in the tests immediately after the irradiation.

## Claims

1. An optical disc comprising a substrate provided with an information recorded portions formed therein or a recording layer disposed thereon for recording information, and a plurality of layers further disposed on the substrate, wherein at least one of the plurality of layers is a layer formed by electron beam irradiation.

2. The optical disc according to claim 1, wherein the layer formed by electron beam irradiation is a layer irradiated with an electron beam at an acceleration voltage of less than 150 kV.

3. The optical disc according to claim 2, wherein the layer formed by electron beam irradiation is a layer irradiated with an electron beam at an acceleration voltage of from 10 to 120 kV.

4. The optical disc according to claim 3, wherein the layer formed by electron beam irradiation is a layer irradiated with an electron beam at an acceleration voltage of from 30 to 80 kV.

5. The optical disc according to claim 2, wherein the layer formed by electron beam irradiation is a layer irradiated with an electron beam by an electron beam irradiation apparatus of a vacuum tube type.

6. An optical disc comprising a substrate provided with an information recorded portions formed therein or a recording layer disposed thereon for recording information, and a reflection layer and a protection coat layer disposed thereon, and further comprising at least one of a hiding layer, a print layer, and an outermost light transmitting protection layer, as needed, wherein at least one of the protection coat layer, the hiding layer, the print layer, and the light transmitting protection layer is a layer formed by electron beam irradiation.

7. The optical disc according to claim 6, wherein the layer formed by electron beam irradiation is a layer irradiated with an electron beam at an acceleration voltage of less than 150 kV.

8. The optical disc according to claim 7, wherein the layer formed by electron beam irradiation is a layer irradiated with an electron beam at an acceleration voltage of from 10 to 120 kV.

9. The optical disc according to claim 8, wherein the layer formed by electron beam irradiation is a layer irradiated with an electron beam at an acceleration voltage of from 30 to 80 kV.

10. The optical disc according to claim 7. wherein the layer formed by electron beam irradiation is a layer irradiated with an electron beam by an electron beam irradiation apparatus of a vacuum tube type.

11. An optical disc comprising a substrate provided with an information recorded portions formed therein or a recording layer disposed thereon for recording information, and a reflection layer, a protection coat layer, a hiding layer, and a print layer disposed thereon in this order, wherein at least the hiding layer is a layer formed by electron beam irradiation.

12. The optical disc according to claim 11, wherein the layer formed by electron beam irradiation is a layer irradiated with an electron beam at an acceleration voltage of less than 150 kV.

13. The optical disc according to claim 12, wherein the layer formed by electron beam irradiation is a layer irradiated with an electron beam at an acceleration voltage of from 10 to 120 kV.

14. The optical disc according to claim 13, wherein the layer formed by electron beam irradiation is a layer irradiated with an electron beam at an acceleration voltage of from 30 to 80 kV.

15. The optical disc according to claim 12, wherein the layer formed by electron beam irradiation is a layer irradiated with an electron beam by an electron beam irradiation apparatus of a vacuum tube type.

16. An optical disc comprising two structure bodies bonded to each other by an adhesive layer, each of which comprises a substrate and one or a plurality of layers disposed thereon, and at least one of which is provided with an information recorded portions or a recording layer for recording information, wherein the adhesive layer is a layer cured by electron beam irradiation.

17. The optical disc according to claim 16, wherein the layer cured by electron beam irradiation is a layer irradiated with an electron beam at an acceleration voltage of less than 150 kV.

18. The optical disc according to claim 17, wherein the layer cured by electron beam irradiation is a layer irradiated with an electron beam at an acceleration voltage of from 10 to 120 kV.

19. The optical disc according to claim 18, wherein the layer cured by electron beam irradiation is a layer irradiated with an electron beam at an acceleration voltage of from 30 to 80 kV.

20. The optical disc according to claim 17, wherein the layer cured by electron beam irradiation is a layer irradiated with an electron beam by an electron beam irradiation apparatus of a vacuum tube type.

21. A manufacturing method of manufacturing an optical disc that comprises a substrate provided with an information recorded portions formed therein or a recording layer disposed thereon for recording information, and a plurality of layers further disposed on the substrate, the method comprising:
coating a resin to be cured by an electron beam to form at least one of the plurality of layers; and
then curing the resin by irradiating the resin with the electron beam.

22. The method according to claim 21, wherein the electron beam is set at an acceleration voltage of less than 150 kV.

23. The method according to claim 22, wherein the electron beam is set at an acceleration voltage of from 10 to 120 kV.

24. The method according to claim 23, wherein the electron beam is set at an acceleration voltage of from 30 to 80 kV.

25. The method according to claim 22, wherein the electron beam is radiated by an electron beam irradiation apparatus of a vacuum tube type.

26. A manufacturing method of manufacturing an optical disc that comprises a substrate provided with an information recorded portions formed therein or a recording layer disposed thereon for recording information, and a reflection layer and a protection coat layer disposed thereon, and further comprises at least one of a hiding layer, a print layer, and an outermost light transmitting protection layer, as needed, the method comprising:
coating a resin to be cured by an electron beam to form at least one of the protection coat layer, the hiding layer, the print layer, and the light transmitting protection layer; and
then curing the resin by irradiating the resin with the electron beam.

27. The method according to claim 26, wherein the electron beam is set at an acceleration voltage of less than 150 kV.

28. The method according to claim 27, wherein the electron beam is set at an acceleration voltage of from 10 to 120 kV.

29. The method according to claim 28, wherein the electron beam is set at an acceleration voltage of from 30 to 80 kV.

30. The method according to claim 27, wherein the electron beam is radiated by an electron beam irradiation apparatus of a vacuum tube type.

31. A manufacturing method of manufacturing an optical disc that comprises a substrate provided with an information recorded portions formed therein or a recording layer disposed thereon for recording information, and a reflection layer, a protection coat layer, a hiding layer, and a print layer disposed thereon in this order, the method comprising:
coating a resin to be cured by an electron beam to form at least the hiding layer; and
then curing the resin by irradiating the resin with the electron beam.

32. The method according to claim 31, wherein the electron beam is set at an acceleration voltage of less than 150 kV.

33. The method according to claim 32, wherein the electron beam is set at an acceleration voltage of from 10 to 120 kV.

34. The method according to claim 33, wherein the electron beam is set at an acceleration voltage of from 30 to 80 kV.

35. The method according to claim 32, wherein the electron beam is radiated by an electron beam irradiation apparatus of a vacuum tube type.

36. A manufacturing method of manufacturing an optical disc that comprises two structure bodies bonded to each other by an adhesive layer, each of which comprises a substrate and one or a plurality of layers disposed thereon, and at least one of which is provided with a recording layer, the method comprising:
coating a resin to be cured by an electron beam to form the adhesive layer; and
then curing the resin by irradiating the resin with the electron beam.

37. The method according to claim 36, wherein the electron beam is set at an acceleration voltage of less than 150 kV.

38. The method according to claim 37, wherein the electron beam is set at an acceleration voltage of from 10 to 120 kV.

39. The method according to claim 38, wherein the electron beam is set at an acceleration voltage of from 30 to 80 kV.

40. The method according to claim 37, wherein the electron beam is radiated by an electron beam irradiation apparatus of a vacuum tube type.
